# EUROPEAN PATENT SPECIFICATION

(11) **EP 2 838 945 B1**
(45) Date of publication and mention of the grant of the patent: **08.06.2016**
(21) Application number: 13725797.8
(22) Date of filing: 16.04.2013
(51) Int. Cl.: C08K 5/00, C08K 5/10

(54) **COMPOSITION COMPRISING AT LEAST ONE BIODEGRADABLE POLYMER AND AT LEAST ONE PLASTICISER**
ZUSAMMENSETZUNG MIT MINDESTENS EINEM BIOLOGISCH ABBAUBAREN POLYMER UND MINDESTENS EINEM WEICHMACHER
COMPOSITION COMPRENANT AU MOINS UN POLYMÈRE BIODÉGRADABLE ET AU MOINS UN PLASTIFIANT

(30) Priority: 17.04.2012 IT MI20120634
(43) Date of publication of application: 25.02.2015
(73) Proprietor: BIO-ON S.p.A., 40016 SAN GIORGIO DI PIANO (BO) (IT)
(72) Inventor: FABBRI, Paola, I-40056 Crespellano (BO) (IT)
(74) Representative: Bottero, Carlo
(86) International application number: PCT/IB2013/053013
(87) International publication number: WO 2013/156930

(56) References cited:
- EP-A1- 0 980 894
- EP-A1- 1 403 322
- WO-A1-99/23146
- WO-A1-2009/070398

## Description

The present invention relates to a composition comprising at least one biodegradable polymer and at least one plasticiser. More particularly, the present invention relates to a composition comprising at least one polyhydroxyalkanoate (PHA) as biodegradable polymer and at least one cyclohexane-polycarboxylic acid ester as plasticiser.

Polyhydroxyalkanoates (PHAs) are homopolymers or copolymers of hydroxyalkanoate, such as 3-hydroxybutyrate (3HB), 3-hydroxyvalerate (3HV), 4-hydroxyvalerate (4HV) and 3-hydroxyhexanoate (3HH). They are synthesised and accumulated by various micro-organisms, particularly bacteria, as carbon and energy reserve materials for cell metabolism. PHAs can be produced through fermentation of suitable bacterial strains using organic substrate, usually based on carbohydrates, organic acids and alcohols. Biopolyesters are synthesised and accumulated by the cells from which they must then be extracted in order to obtain polymeric material with sufficient purity.

Compared to synthetic polymers and other biopolymers obtained from renewable sources (for example polylactic acid (PLA)), PHAs have numerous advantages, in particular in terms of biodegradability, recyclability and hydrophobicity, which make such products particularly promising as biodegradable alternatives to petrochemical-based polymers.

The potential use of PHAs, and in particular the 3HB homopolymer, is at least partly limited due to some of their suboptimal chemical and physical properties, such as poor ductility and brittleness, which make it difficult to work with using common methods of extrusion or moulding, resulting in articles with poor resistance to mechanical stress. In addition, its mechanical strength properties tend to deteriorate over time due to the onset of ageing processes of the material.

The possibility of using PHAs as valid plastic alternatives to petrochemical-based materials is therefore linked to the identification of technical solutions which make it possible to significantly improve the processability and resistance to mechanical stress, without compromising the biodegradability of PHAs.

International patent application WO 99/23146 describes compositions in pellet form which comprise a PHA with a molecular weight greater than 470,000 and an effective amount of at least one plasticiser selected from: esters with high boiling points, selected from: phthalates, isophthalates, citrates, adipates, sebacates, azelates; alkyl ethers/esters, epoxy derivatives, substituted fatty acids selected from palmitates, stearates, oleates, ricinoleates and laurates; and polymeric esters. A list of possible plasticisers can be found on p. 11-16 of the above-mentioned patent application. It is also indicated that other components may be added, such as: nucleating agents, for example: saccharin, talc, boron nitride, ammonium chloride, nucleating PHB crystals, organic phosphonic acids and combinations thereof with stearates; thermal stabilisers, such as for instance products of the formula R-P(=O)R'OH, where R is an alkyl, aromatic or cycloalkyl group, and R' is OH or R.

The article by Kalnins et al, British Journal of Science, September 2011, Vol. 1(1), reports a study into the effects of adding a plasticiser to PHB (polyhydroxybutyrate) samples used in the production of films. Dibutylsebacate (DBS), dioctylsebacate (DOS), polyethylen glycol (PEG) 300, oxypropylated glycerols (Laprols) and polyisobutylene (PIB) were used as plasticisers. The authors report that the best results in terms of plasticising effect could be achieved using lower molecular weight plasticisers (i.e. DBS, DOS and PEG 300).

The Applicant has faced the problem of obtaining PHA-based compositions with improved processability, so as to allow production with equipment and techniques usually employed for thermoplastic materials such as extrusion, injection moulding, compression moulding, blow moulding, calendering, thermoforming, and others, and at the same time improved mechanical properties of the final articles, in particular with regard to yield and breaking resistance, tensile elastic modulus, compression elastic modulus, elongation at yield and at break.

The Applicant has now found that it is possible to achieve the above-mentioned aims and others which will be better illustrated in the following by adding to a PHA at least one plasticiser selected from cyclohexane-polycarboxylic acid esters as defined below.

Firstly, the present invention therefore relates to a composition comprising:
at least one polyhydroxyalkanoate (PHA);
at least one cyclohexane-polycarboxylic acid ester.

With regard to the PHAs, these are preferably polymers containing repeating units of formula:

-O-CHR₁-(CH₂)ₙ-CO- (I)

wherein:
R₁ is selected from: -H, C₁-C₁₂ alkyls, C₄-C₁₆ cycloalkyls, C₂-C₁₂ alkenyls, optionally substituted with at least one group selected from: halogen (F, Cl, Br), -CN, -OH, -COOH, -OR, -COOR (R = C₁-C₄ alkyl, benzyl);
n is zero or an integer from 1 to 6, preferably 1 or 2.

Preferably, R₁ is methyl or ethyl, and n is 1 or 2.

The PHAs can either be homopolymers, copolymers or terpolymers. In the case of copolymers and terpolymers, they can be made up of various repeating units of formula (I), or at least one repeating unit of formula (I) combined with at least one repeating unit derived from comonomers which are able to copolymerise with hydroxyalkanoates, for example lactones or lactams. In the latter case, the repeating units of formula (I) are present in an amount equal to at least 10% of the total moles of the repeating unit.

Particularly preferred repeating units of formula (I) are those deriving from: 3-hydroxybutyrate, 3-hydroxyvalerate, 3-hydroxyhexanoate, 3-hydroxyoctanoate, 3-hydroxyundecen-10-enoate, 4-hydroxyvalerate.

Particularly preferred PHAs are: poly-3-hydroxybutyrate (PHB), poly-3-hydroxyvalerate (PHV), poly-3-hydroxyhexanoate (PHH), poly-3-hydroxyoctanoate (PHO), poly(3-hydroxybutyrate-co-3-hydroxyvalerate) (PHBV), poly(3-hydroxybutyrate-co-3-hydroxyhexanoate) (PHBH), poly(3-hydroxybutyrate-co-4-hydroxybutyrate), poly(3-hydroxyoctanoate-co-3-hydroxyundecen-10-enoate) (PHOU), poly(3-hydroxybutyrate-co-3-hydroxyvalerate-co-4-hydroxyvalerate (PHBVV), or mixtures thereof.

Preferably, the PHA has a weight-average molecular weight (Mw) which may vary from 5,000 to 800,000 Da, more preferably from 175,000 to 400,000 Da.

With regard to the production of PHAs, this is preferably carried out through microbial fermentation of a substrate containing carbohydrates (in particular sucrose) using a strain of micro-organisms which can produce PHA, and subsequent recovery of the PHAs from the cellular mass. For further details see, for example, patent applications WO 99/23146 and WO 2011/045625. Substrates suitable for producing PHA through fermentation can be obtained in particular from plant processing, for example juices, molasses, pulp resulting from processing sugar beet, sugar cane. Such substrates typically contain, in addition to sucrose and other carbohydrates, organic growth factors, nitrogen, phosphorus and/or other minerals useful as nutrients for cell growth.

With regard to cyclohexane-polycarboxylic acid esters, these are generally products in which a cyclohexane ring is substituted by at least two carboxy groups esterified with at least one C₁-C₃₀ alcohol, preferably C₅-C₂₀, even more preferably C₈-C₁₂. The alcohol has preferably a branched chain, even more preferably is a 1-methyl-alkyl or 1-ethyl-alkyl alcohol. Preferably, the cyclohexane ring is substituted by two carboxy groups at 1,2, 1,3 or 1,4 positions, or by three carboxy groups at 1,3,5, 1,2,3 or 1,2,4 positions.

Preferably, the cyclohexane-polycarboxylic acid ester used as plasticiser in accordance with the present invention is selected from:
cyclohexane-1,2-dicarboxylic acid di(isobutyl) ester; cyclohexane-1,2-dicarboxylic acid bis(1,1-dimethylpropyl) ester; cyclohexane-1,2-dicarboxylic acid bis(2-methylbutyl) ester; cyclohexane-1,2-dicarboxylic acid bis(1-ethylbutyl) ester; cyclohexane-1,2-dicarboxylic acid bis(1,3-dimethylbutyl) ester; cyclohexane-1,2-dicarboxylic acid bis(1,1-diethylpropyl) ester; cyclohexane-1,2-dicarboxylic acid di(cyclohexyl) ester; cyclohexane-1,2-dicarboxylic acid di(pentyl) ester; cyclohexane-1,2-dicarboxylic acid di(isopentyl) ester; cyclohexane-1,2-dicarboxylic acid bis(2,2-dimethylhexyl) ester; cyclohexane-1,2-dicarboxylic acid di(isoheptyl) ester; cyclohexane-1,2-dicarboxylic acid di(isononyl) ester; cyclohexane-1,2-dicarboxylic acid di(3,5,5-trimethylhexyl) ester; cyclohexane-1,2-dicarboxylic acid di(2,6-dimethyl-4-heptyl) ester; cyclohexane-1,2-dicarboxylic acid di(isononyl) ester; cyclohexane-1,2-dicarboxylic acid di(isodecyl) ester; cyclohexane-1,2-dicarboxylic acid di(isoundecyl) ester; cyclohexane-1,2-dicarboxylic acid di(isotridecyl) ester; cyclohexane-1,2-dicarboxylic acid di(isooctadecyl) ester; cyclohexan-dicarboxylic acid 1-heptyl-3-hexyl ester; cyclohexan-dicarboxylic acid 1-[2-ethylbutyl]-3-heptyl ester; cyclohexan-dicarboxylic acid 1-dimethylbutyl-3-heptyl ester; cyclohexan-dicarboxylic acid 1-[1-ethylbutyl]-3-heptyl ester; cyclohexan-dicarboxylic acid 1-[2-ethylbutyl]-3-heptyl ester; cyclohexan-dicarboxylic acid 1-[1-ethyl-2-methylpropyl]-3-heptyl ester; cyclohexan-dicarboxylic acid 1-decyl-3-hexyl ester; cyclohexan-dicarboxylic acid 1-nonyl-3-octyl ester; and mixtures thereof. Other esters which can be used as plasticisers in accordance with the present invention are selected from the same products as reported above wherein the cyclohexane ring has the two ester groups at 1,3 or 1,4 positions.

Esters of this type are described, for example, in patents US 6,284,917, US 7,208,545, US 7,319,161, US 7,816,553, US 2010/0028528, WO 03/029339, WO 2009/070398 and US 7,893,295. They are usually produced through selective hydrogenation of the corresponding benzene polycarboxylic acids or derivatives thereof (in particular esters), in the presence of a catalyst comprising at least one transition metal from Group VIII of the Periodic Table (in particular ruthenium or palladium), and possibly at least one transition metal from Group I or VII of the Periodic Table, combined with a microporous media. The above esters are available on the market under the trademark Hexamoll^{™} (BASF AG).

Preferably, the composition according to the present invention comprises said at least one cyclohexane-polycarboxylic acid ester in an amount of from 1% to 50% by weight, more preferably from 2% to 30% by weight, even more preferably from 5% to 25% by weight. It should be noted that the percentages stated in the present description and in the claims, unless expressly indicated otherwise, are intended as percentages by weight relative to the weight of the PHA polymeric matrix.

The amount of plasticiser to be added to the composition may be selected according to the final characteristics that are to be obtained, that is the required plasticising effect. It should be noted that the esters according to the present invention do not usually show any effect of exudation, as they are particularly compatible with the polymeric matrix, therefore they can be used in high amounts (typically up to 50% by weight).

The composition in accordance with the present invention may optionally include other minor components, such as: antioxidants, thermal stabilisers, reinforcing fillers, process adjuvants, nucleating agents.

In a preferred embodiment, the composition according to the present invention further comprises at least one thermal stabiliser, preferably in an amount of from 0.05% to 2% by weight, more preferably from 0.1% to 1% by weight. The thermal stabilisers can be selected in particular from those used for thermoplastic materials, such as: phosphoric or phosphorous acid esters (for example tris(nonylphenyl) phosphite); sterically hindered phenols (for example: octadecyl-3-(3,5-ditertbutyl-4-hydroxyphenyl) propionate, pentaerythritol tetrakis(3-(3,5-diterbutyl-4-hydroxyphenyl)propionate); metal carboxylates; organo-stannic compounds; N-substituted maleimides; maleates and metallic stearates; or mixtures thereof.

In a preferred embodiment, the composition according to the present invention further comprises at least one nucleating agent, preferably in an amount of from 0.05% to 5% by weight, more preferably from 0.1% to 3% by weight. The function of the nucleating agent is primarily to reduce the average size of the spherulites, namely of those crystalline domains, of lamellar shape organised into three-dimensional spherulitic morphologies, that the PHAs form during cooling, which are characterised by high density and hardness but which tend to reduce ductility of the material, thus making it stiff and hard but brittle. In essence, it is believed that the nucleating agent is able to increase the rate of spherulite germination with respect to the growth rate of the same.

Preferably, said at least one nucleating agent is selected from: oxides, hydroxides and salts, or mixtures thereof, of metals, particularly of alkali, alkaline-earth or transition metals (for example sodium, potassium, calcium, magnesium, barium, zinc), such as for instance: stearates or palmitates; zinc oxide ZnO, titanium oxide TiO₂, silica SiO₂, magnesia MgO; silicates or carbonates (e.g. kaolin, talc).

In a preferred form, the composition according to the present invention further comprises at least one reinforcing filler, preferably in an amount of from 1% to 50% by weight, more preferably from 5% to 20% by weight. Preferably, said at least one reinforcing filler is selected from: inorganic oxides or hydroxides, such as for instance alumina, silica, quartz, titania, zirconia; carbon black. It should be noted that the reinforcing filler can also act as a nucleating agent.

The compositions in accordance with the present invention are preferably thermoplastic compositions and can be produced in accordance with known techniques for thermoplastic materials, for example by mixing the polymer in its molten state, the plasticiser and any other components in a continuous or discontinuous mixer. For example, it can be used an open mixer of the Banbury-type, an internal batch mixer, a single screw or twin screw extruder, in which the polymer is heated to achieve a fluid or at least semi-fluid state, so as to favour homogeneous incorporation and dispersion of the plasticiser and other components that may be present. At the end of mixing, the composition thus obtained is usually cooled to allow it to harden and reduced into a subdivided form, for example in the form of granules, beads, pellets, flakes, in order to facilitate its subsequent use in the production of articles.

The compositions in accordance with the present invention are particularly suitable to producing various types of either rigid or flexible plastic articles, such as: films and sheets, either rigid or flexible, particularly for packaging; fibres; non-woven fabrics; various objects such as: containers, bottles, lamp components or other decor items; devices for food, medical or veterinary use or parts thereof. The production of such articles can be carried out with equipment and in accordance with techniques usually employed for thermoplastic materials, such as: extrusion, spinning, injection moulding, compression moulding, blow moulding, calendering, thermoforming, film blowing, coating.

The following examples are provided for the sole purpose of illustrating the present invention and should not be intended to limit the scope of protection defined by the accompanying claims.

### EXAMPLE 1

The following composition was prepared:
100% by weight of poly(hydroxybutyrate) (PHB) (produced by Bio-On Srl), with average molecular weight (weight average) M_{w} = 245,000 (determined through GPC with relative calibration method using monodisperse polystyrene standards, chloroform as eluent, universal chromatographic columns suitable for molecular weights from 400 to 2,000,000 Da);
12% by weight of commercial product Hexamoll^{™} DINCH (BASF AG), 1,2-cyclohexane-dicarboxylic acid diisononyl ester;
0.4% by weight of a mixture of thermal stabilisers consisting of: trinonylphosphate, Irganox^{™} 1010 (pentaerythritol tetrakis(3-(3,5-di-tert-butyl-4-hydroxyphenyl) propionate) - BASF AG) and Irganox^{™} 1076 (octadecyl-3-(3,5-di-tert-butyl-4-hydroxyphenyl) propionate - BASF AG);
0.5% by weight of kaolin in the form of micrometer-sized particles, as nucleating agent.

Percentages refer to the PHB weight.

The composition was prepared by mixing in molten state using a co-rotating twin screw extruder with 30 L/D screws operating at 180 rpm, with temperature profile so as to maintain the molten material at about 175°C, directly fed with the above-mentioned components in the form of a cold pre-mix.

After mixing in molten state inside the extruder, the composition was cooled in water and then reduced to granules (length about 3 mm and diameter about 1 mm), using a cutter directly connected to the extruder die. The granulated composition was then fed to an injection moulding apparatus to obtain specimens for measurements of mechanical tensile strength according to standard ISO 527 1-2 (1997) which were carried out with an Instron dynamometer with a 5 kN load cell, traction speed 1 mm/min, until rupture of the specimen. The results are reported in Table 1, as average values of at least 10 specimens broken in the sample useful portion, and relative standard deviation.

### EXAMPLE 2

A composition identical to that of Example 1 was prepared, according to the same process, except that the plasticiser Hexamoll™ DINCH was added in an amount equal to 5% by weight (relative to the PHB weight).

Mechanical strength tests were carried out in accordance with standard ISO 527 1-2 (1997), as reported in Example 1. The results are reported in Table 1.

### EXAMPLE 3 (comparative)

A composition identical to that of Example 1 was prepared, according to the same process, except that, instead of Hexamol^{™} DINCH, triethyl acetate (Sigma-Aldrich), a product usually used as plasticiser for polymers of petrochemical origin such as polyvinyl acetate (PVAc), was used as a plasticiser, in an amount equal to 12% by weight (relative to the PHB weight).

Mechanical strength tests were carried out in accordance with standard ISO 527 1-2 (1997), as reported in Example 1. The results are reported in Table 1.

### EXAMPLE 4 (comparative)

A composition identical to that of Example 1 was prepared, according to the same process, except that, instead of Hexamoll™ DINCH, propoxylated glycerol (Sigma-Aldrich), a product usually used as a plasticiser for petrochemical-based polymers such as polyethylene terephthalate (PET) or polymers obtained from renewable sources such as polylactic acid (PLA), was used as plasticiser, in an amount equal to 12% by weight (relative to the weight of PHB).

Mechanical strength tests were carried out in accordance with standard ISO 527 1-2 (1997), as reported in Example 1. The results are reported in Table 1.

### EXAMPLE 5 (comparative)

A composition identical to that of Example 1 was prepared, according to the same process, except that, instead of Hexamoll™ DINCH, propoxylated glycerol (Sigma-Aldrich), a product usually used as plasticiser for polymers of petrochemical origin such as polyethylene terephthalate (PET) or polymers obtained from renewable sources such as polylactic acid (PLA), was used as plasticiser, in an amount equal to 25% by weight (relative to the PHB weight).

Mechanical strength tests were carried out in accordance with standard ISO 527 1-2 (1997), as reported in Example 1. The results are reported in Table 1.

**TABLE 1.**

| EXAMPLE | Elastic modulus (GPa) | Tensile strength at break (MPa) | Elongation at break (%) |
|---|---|---|---|
| 1 | 1.08 ± 0.04 | 19.05 ± 3.10 | 3.3 ± 0.3 |
| 2 | 0.580 ± 0.070 | 11.43 ± 1.13 | 1.9 ± 0.1 |
| 3 (*) | 0.610 ± 0.068 | 10.88 ± 2.30 | 1.6 ± 0.3 |
| 4 (*) | 0.686 ± 0.050 | 11.22 ± 1.18 | 1.3 ± 0.1 |
| 5 (*) | 0.567 ± 0.037 | 10.89 ± 2.71 | 1.4 ± 0.4 |

| | | | |
|---|---|---|---|
| (*) comparative | | | |

From the data reported in Table 1, it can be seen that the compositions in accordance with the present invention allow values of elasticity modulus in tension, tensile strength at break and elongation at break to be achieved which are significantly higher than the comparative examples with the same amount of plasticiser added. This enables manufactured articles to be obtained which are, as a whole, more resistant from a mechanical point of view, in particular more rigid and less fragile, which can withstand without failure higher, either tensile or flexural or compressive, mechanical stresses, over the lifetime of the article, as well as during the forming process, such as for example during extraction of the article from the forming moulds.

### EXAMPLES 6-8 (comparative)

Compositions identical to that of Example 1 were prepared, according to the same process, except that, instead of Hexamoll™ DINCH, the following were used as plasticisers, in amounts equal to 12% by weight (relative to the PHB weight):
triethyl acetate (Sigma-Aldrich) (Example 6);
triethyl citrate (Sigma-Aldrich) (Example 7);
dioctyl adipate (Sigma-Aldrich) (Example 8) ; products usually used as plasticisers for vinyl polymers and polyesters.

Following mixing in molten state inside the extruder, each composition was cooled in water and reduced to granules (length about 3 mm and diameter about 1 mm), using a cutter connected directly to the extruder die, and fed to an injection moulding apparatus in order to obtain specimens for measuring mechanical tensile strength according to standard ISO 527 1-2 (1997). For all three plasticisers, the specimens thus obtained showed a considerable exudation of the plasticiser and evident embrittlement of the composition, such as not to permit the tests of tensile strength to be carried out.

## Claims

1. A composition comprising:
at least one polyhydroxyalkanoate (PHA);
at least one cyclohexane polycarboxylic acid ester.

2. Composition according to claim 1, wherein said at least one PHA is selected from polymers containing repeating units of formula:
-O-CHR₁- (CH₂)ₙ-CO- (I)
wherein:
R₁ is selected from: -H, C₁-C₁₂ alkyls, C₄-C₁₆ cycloalkyls, C₂-C₁₂ alkenyls, optionally substituted with at least one group selected from: halogen (F, Cl, Br), -CN, -OH, -COOH, -OR, -COOR (R = C₁-C₄ alkyl, benzyl);
n is zero or an integer from 1 to 6, preferably 1 or 2.

3. Composition according to claim 2, wherein said at least one PHA is selected from: poly-3-hydroxybutyrate (PHB), poly-3-hydroxyvalerate (PHV), poly-3-hydroxyhexanoate (PHH), poly-3-hydroxyoctanoate (PHO), poly(3-hydroxybutyrate-co-3-hydroxyvalerate) (PHBV), poly(3-hydroxybutyrate-co-3-hydroxyhexanoate) (PHBH), poly(3-hydroxybutyrate-co-4-hydroxybutyrate), poly(3-hydroxyoctanoate-co-3-hydroxyundecen-10-enoate) (PHOU), poly(3-hydroxybutyrate-co-3-hydroxyvalerate-co-4-hydroxyvalerate (PHBVV), or mixtures thereof.

4. Composition according to any one of the preceding claims, wherein said at least one PHA has a weight-average molecular weight (M_{w}) from 5,000 to 800,000 Da, preferably from 175,000 to 400,000 Da.

5. Composition according to any one of the preceding claims, wherein said at least one cyclohexane polycarboxylic acid ester has a cyclohexane ring substituted by at least two carboxy groups esterified with at least one C₁-C₃₀, preferably C₅-C₂₀, more preferably C₈-C₁₂, alcohol.

6. Composition according to claim 5, wherein the cyclohexane ring is substituted by two carboxy groups at 1,2, 1,3 or 1,4 positions, or by three carboxy groups at 1,3,5, 1,2,3 or 1,2,4 positions.

7. Composition according to claim 6, wherein said at least one cyclohexane polycarboxylic acid ester is selected from:
cyclohexane-1,2-dicarboxylic acid di(isobutyl) ester; cyclohexane-1,2-dicarboxylic acid bis(1,1-dimethylpropyl) ester; cyclohexane-1,2-dicarboxylic acid bis(2-methylbutyl) ester; cyclohexane-1,2-dicarboxylic acid bis(1-ethylbutyl) ester; cyclohexane-1,2-dicarboxylic acid bis(1,3-dimethylbutyl) ester; cyclohexane-1,2-dicarboxylic acid bis(1,1-diethylpropyl) ester; cyclohexane-1,2-dicarboxylic acid di(cyclohexyl) ester; cyclohexane-1,2-dicarboxylic acid di(pentyl) ester; cyclohexane-1,2-dicarboxylic acid di(isopentyl) ester; cyclohexane-1,2-dicarboxylic acid bis(2,2-dimethylhexyl) ester; cyclohexane-1,2-dicarboxylic acid di(isoheptyl) ester; cyclohexane-1,2-dicarboxylic acid di(isononyl) ester; cyclohexane-1,2-dicarboxylic acid di(3,5,5-trimethylhexyl) ester; cyclohexane-1,2-dicarboxylic acid di(2,6-dimethyl-4-heptyl) ester; cyclohexane-1,2-dicarboxylic acid di(isononyl) ester; cyclohexane-1,2-dicarboxylic acid di(isodecyl) ester; cyclohexane-1,2-dicarboxylic acid di(isoundecyl) ester; cyclohexane-1,2-dicarboxylic acid di(isotridecyl) ester; cyclohexane-1,2-dicarboxylic acid di(isooctadecyl) ester; cyclohexan-dicarboxylic acid 1-heptyl-3-hexyl ester; cyclohexan-dicarboxylic acid 1-[2-ethylbutyl]-3-heptyl ester; cyclohexan-dicarboxylic acid 1-dimethylbutyl-3-heptyl ester; cyclohexan-dicarboxylic acid 1-[1-ethylbutyl]-3-heptyl ester; cyclohexan-dicarboxylic acid 1-[2-ethylbutyl]-3-heptyl ester; cyclohexan-dicarboxylic acid 1-[1-ethyl-2-methylpropyl]-3-heptyl ester; cyclohexan-dicarboxylic acid 1-decyl-3-hexyl ester; cyclohexan-dicarboxylic acid 1-nonyl-3-octyl ester; and mixtures thereof; and from the same products as reported above wherein the cyclohexane ring has the two ester groups at 1,3 or 1,4 positions.

8. Composition according to any one of the preceding claims, wherein said at least one cyclohexane polycarboxylic acid ester is present in an amount of from 1% to 50% by weight, preferably from 2% to 30% by weight, more preferably from 5% to 25% by weight, with respect to the weight of said at least one PHA.

9. Composition according to any one of the preceding claims, further comprising at least one thermal stabiliser.

10. Composition according to claim 9, wherein said at least one thermal stabiliser is selected from:
phosphoric or phosphorous acid esters; sterically hindered phenols; metal carboxylates; organo-stannic compounds; N-substituted maleimides; metal maleates and stearates; or mixtures thereof.

11. Composition according to any one of the preceding claims, further comprising at least one nucleating agent.

12. Composition according to claim 11, wherein said at least one nucleating agent is selected from:
oxides, hydroxides and salts, or mixtures thereof, of metals, particularly alkali, alkaline-earth or transition metals, or mixtures thereof.

13. Composition according to any one of the preceding claims, further comprising at least one reinforcing filler.

14. Composition according to claim 13, wherein said at least one reinforcing filler is selected from:
inorganic oxides or hydroxides, such as for instance alumina, silica, quartz, titania, zirconia; carbon black.

15. Use of a composition according to any one of the preceding claims for manufacturing articles by means of a processing method selected from: extrusion, spinning, injection moulding, compression moulding, blow moulding, calendering, thermoforming, film blowing, coating.

## Patentansprüche

1. Zusammensetzung, die Folgendes aufweist:
mindestens ein Polyhydroxyalkanoat (PHA);
mindestens einen Cyclohexanpolycarbonsäureester.

2. Zusammensetzung nach Anspruch 1, wobei das mindestens eine PHA aus Polymeren ausgewählt ist, die wiederkehrende Einheiten bzw. Wiederholungseinheiten der folgenden Formel aufweisen:
-O-CHR₁-(CH₂)ₙ-CO- (I)
wobei:
R₁ ausgewählt ist aus: -H, C₁- C₁₂-Alkylen, C₄-C₁₆-Cycloalkylen, C₂-C₁₂-Alkenylen, optional substituiert mit mindestens einer Gruppe, die aus Folgenden ausgewählt ist: Halogen (F, Cl, Br), -CN, -OH, -COOH, - OR, -COOR (R = C₁-C₄-Alkyl, Benzyl);
n Null oder eine ganze Zahl von 1 bis 6 ist, vorzugsweise 1 oder 2 ist.

3. Zusammensetzung nach Anspruch 2, wobei das mindestens ein PHA aus Folgendem ausgewählt ist: Poly-3-hydroxybutyrat (PHB), Poly-3-hydroxyvalerat (PHV), Poly-3-hydroxyhexanoat (PHH), Poly-3-hydroxyoctanoat (PHO), Poly(3-hydroxybutyrat-co-3-hydroxyvalerat) (PHBV), Poly(3-hydroxybutyrat-co-3-hydroxyhexanoat) (PHBH), Poly(3-hydroxybutyrat-co-4-hydroxybutyrat), Poly(3-hydroxyoctanoat-co-3-hydroxyundecen-10-enoat) (PHOU), Poly(3-hydroxybutyrat-co-3-hydroxyvalerat-co-4-hydroxyvalerat) (PHBVV) oder Mischungen davon.

4. Zusammensetzung nach einem der vorhergehenden Ansprüche, wobei das mindestens eine PHA ein Durchschnittsgewicht des Molekulargewichts bzw. der Molekülmasse (M_{w}) von 5.000 bis 800.000 Da, vorzugsweise von 175.000 bis 400.000 Da hat.

5. Zusammensetzung nach einem der vorhergehenden Ansprüche, wobei der mindestens eine Cyclohexanpolycarbonsäureester einen Cyclohexanring hat, der mit mindestens zwei Carboxygruppen substituiert ist, die mit mindestens einem C₁-C₃₀, bevorzugt mit C₅-C₂₀, noch bevorzugter mit C₈-C₁₂, Alkohol, verestert sind.

6. Zusammensetzung nach Anspruch 5, wobei der Cyclohexan-Ring mit zwei Carboxygruppen in den 1,2, 1,3 oder 1,4 Positionen oder durch drei Carboxygruppen in den 1,3,5, 1,2,3 oder 1,2,4 Positionen substituiert ist.

7. Zusammensetzung nach Anspruch 6, wobei der mindestens eine Cyclohexanpolycarbonsäureester aus Folgenden ausgewählt ist:
Cyclohexan-1,2-dicarbonsäure-di(isobutyl)ester; Cyclohexan-1,2-dicarbonsäure-bis(1,1-dimethylpropyl)ester; Cyclohexan-1,2-dicarbonsäure-bis(2-methylbutyl)ester; Cyclohexan-1,2-dicarbonsäure-bis(1-ethylbutyl)ester; Cyclohexan-1,2-dicarbonsäure-bis(1,3-dimethylbutyl)ester; Cyclohexan-1,2-dicarbonsäure-bis(1,1-diethylpropyl)ester; Cyclohexan-1,2-dicarbonsäure-di(cyclohexyl)ester; Cyclohexan-1,2-dicarbonsäure-di(pentyl)ester; Cyclohexan-1,2-dicarbonsäure-di(isopentyl)ester; Cyclohexan-1,2-dicarbonsäure-bis(2,2-dimethylhexyl)ester; Cyclohexan-1,2-dicarbonsäure-di(isoheptyl)ester; Cyclohexan-1,2-dicarbonsäure-di(isononyl)ester; Cyclohexan-1,2-dicarbonsäure-di(3,5,5-trimethylhexyl)ester; Cyclohexen-1,2-dicarbonsäure-di(2,6-dimethyl-4-heptyl)ester; Cyclohexan-1,2-dicarbonsäure-di(isononyl)ester; Cyclohexan-1,2-dicarbonsäure-di(isodecyl)ester; Cyclohexan-1,2-dicarbonsäure-di(isoundecyl)ester; Cyclohexan-1,2-dicarbonsäure-di(isotridecyl)ester; Cyclohexan-1,2-dicarbonsäure-di(isooctadecyl)ester; Cyclohexan-dicarbonsäure-1-heptyl-3-hexylester; Cyclohexan-dicarbonsäure-1-[2-ethylbutyl]-3-heptylester; Cyclohexan-dicarbonsäure-1-dimethylbutyl-3-heptylester; Cyclohexan-dicarbonsäure-1-[1-ethylbutyl]-3-heptylester; Cyclohexan-dicarbonsäure-1-[2-ethylbutyl]-3-heptylester; Cyclohexan-dicarbonsäure-1-[1-ethyl-2-methylpropyl]-3-heptylester; Cyclohexan-dicarbonsäure-1-decyl-3-hexylester; Cyclohexan-dicarbonsäure-1-nonyl-3-octylester; und Mischungen davon; und von den gleichen Produkten, wie oben genannt, wobei der Cyclohexan-Ring die zwei Estergruppen in den 1,3 oder 1,4 Positionen hat.

8. Zusammensetzung nach einem der vorhergehenden Ansprüche, wobei der mindestens eine Cyclohexanpolycarbonsäureester in einer Menge von 1 bis 50 Gewichts-% vorhanden ist, vorzugsweise von 2 bis 30 Gewichts-%, noch bevorzugter von 5 bis 25 Gewichts-%, und zwar bezogen auf das Gewicht des mindestens einen PHA.

9. Zusammensetzung nach einem der vorhergehenden Ansprüche, welche ferner mindestens einen thermischen Stabilisator aufweist.

10. Zusammensetzung nach Anspruch 9, wobei der mindestens eine thermische Stabilisator aus Folgenden ausgewählt ist: Phosphorsäure- oder Phosphonsäureestern; sterisch gehinderten Phenolen; Metallcarboxylaten; zinnorganischen Verbindungen; N-substituierten Maleimiden; Metall-Maleaten und -Stearaten; oder Mischungen davon.

11. Zusammensetzung nach einem der vorhergehenden Ansprüche, welche ferner mindestens ein keimbildendes Mittel bzw. Nukleierungsmittel aufweist.

12. Zusammensetzung nach Anspruch 11, wobei das mindestens eine Nukleierungsmittel aus Folgenden ausgewählt ist: Oxiden, Hydroxiden und Salzen, oder Mischungen davon, aus Metallen, insbesondere Alkali-, Erdalkali- oder Übergangsmetallen, oder Mischungen davon.

13. Zusammensetzung nach einem der vorhergehenden Ansprüche, welche ferner mindestens einen verstärkenden Füllstoff aufweist.

14. Zusammensetzung nach Anspruch 13, wobei der mindestens eine verstärkende Füllstoff aus Folgenden ausgewählt ist: anorganischen Oxiden oder Hydroxiden, insbesondere Aluminiumoxid, Siliciumdioxid, Quarz, Titandioxid, Zirkoniumdioxid; Carbon Black bzw. Ruß.

15. Verwendung einer Zusammensetzung nach einem der vorhergehenden Ansprüche zum Herstellen von Gegenständen mit Hilfe eines Verarbeitungsverfahrens , das ausgewählt ist aus Extrusion, Spinnen, Spritzguss, Formpressen, Blasformen, Kalandrieren, Thermoformen, Folienblasen bzw. Blasextrusion, Beschichten.

## Revendications

1. Composition comprenant :
- au moins un poly(hydroxy-alcanoate) (PHA) ;
- et au moins un ester d'acide cyclohexane-polycarboxylique.

2. Composition conforme à la revendication 1, dans laquelle ledit PHA au nombre d'au moins un est choisi parmi les polymères qui comportent des motifs répétés de formule :
-O-CHR₁-(CH₂)ₙ-CO- (I)
dans laquelle
- R₁ représente une entité choisie parmi un atome d'hydrogène et les groupes alkyle en C₁-C₁₂, cycloalkyle en C₄-C₁₆ et alcényle en C₂-C₁₂, en option porteurs d'au moins un substituant choisi parmi les atomes d'halogène (fluor, chlore, brome), les groupes cyano, hydroxyle et carboxyle et les groupes symbolisés par -OR ou -COOR où R représente un groupe alkyle en C₁-C₄ ou benzyle,
- et l'indice n vaut 0 ou est un nombre entier valant de 1 à 6 et de préférence 1 ou 2.

3. Composition conforme à la revendication 2, dans laquelle ledit PHA au nombre d'au moins un est choisi parmi les suivants :
poly(3-hydroxy-butyrate) (PHB), poly(3-hydroxy-valérate) (PHV), poly(3-hydroxy-hexanoate) (PHH), poly(3-hydroxy-octanoate) (PHO), poly(3-hydroxy-butyrate-co-3-hydroxy-valérate) (PHBV), poly(3-hydroxy-butyrate-co-3-hydroxy-hexanoate) (PHBH), poly(3-hydroxy-butyrate-co-4-hydroxy-butyrate), poly(3-hydroxy-octanoate-co-3-hydroxyundéc-10-énoate) (PHOU), poly(3-hydroxy-butyrate-co-3-hydroxy-valérate-co-4-hydroxy-valérate) (PHBVV), et leurs mélanges.

4. Composition conforme à l'une des revendications précédentes, dans laquelle ledit PHA au nombre d'au moins un présente une masse molaire moyenne en poids (Mw) de 5 000 à 800 000 Da, et de préférence de 175 000 à 400 000 Da.

5. Composition conforme à l'une des revendications précédentes, dans laquelle ledit ester d'acide cyclohexane-polycarboxylique au nombre d'au moins un comporte un cycle de cyclohexane qui porte, en tant que substituants, au moins deux groupes carboxyle estérifiés avec au moins un alcool en C₁-C₃₀, de préférence en C₅-C₂₀, et mieux encore en C₈-C₁₂.

6. Composition conforme à la revendication 5, dans laquelle le cycle de cyclohexane porte, en tant que substituants, deux groupes carboxyle en positions 1 et 2, 1 et 3, ou 1 et 4, ou trois groupes carboxyle en positions 1, 3 et 5, 1, 2 et 3, ou 1, 2 et 4.

7. Composition conforme à la revendication 6, dans laquelle ledit ester d'acide cyclohexane-polycarboxylique au nombre d'au moins un est choisi parmi les suivants :
ester diisobutylique d'acide cyclohexane-1,2-dicarboxylique, ester de bis(1,1-diméthyl-propyle) d'acide cyclohexane-1,2-dicarboxylique, ester de bis(2-méthyl-butyle) d'acide cyclohexane-1,2-dicarboxylique, ester de bis(1-éthyl-butyle) d'acide cyclohexane-1,2-dicarboxylique, ester de bis(1,3-diméthyl-butyle) d'acide cyclohexane-1,2-dicarboxylique, ester de bis(1,1-diéthyl-propyle) d'acide cyclohexane-1,2-dicarboxylique, ester dicyclohexylique d'acide cyclohexane-1,2-dicarboxylique, ester dipentylique d'acide cyclohexane-1,2-dicarboxylique, ester diisopentylique d'acide cyclohexane-1,2-dicarboxylique, ester de bis(2,2-diméthyl-hexyle) d'acide cyclohexane-1,2-dicarboxylique, ester diisoheptylique d'acide cyclohexane-1,2-dicarboxylique, ester diisononylique d'acide cyclohexane-1,2-dicarboxylique, ester de bis-(3,5,5-triméthyl-hexyle) d'acide cyclohexane-1,2-dicarboxylique, ester de bis(2,6-diméthyl-4-heptyle) d'acide cyclohexane-1,2-dicarboxylique, ester diisononylique d'acide cyclohexane-1,2-dicarboxylique, ester diisodécylique d'acide cyclohexane-1,2-dicarboxylique, ester diisoundécylique d'acide cyclohexane-1,2-dicarboxylique,ester diisotridécylique d'acide cyclohexane-1,2-dicarboxylique, ester diisooctadécylique d'acide cyclohexane-1,2-dicarboxylique, ester 1-heptylique 3-hexylique d'acide cyclohexane-dicarboxylique, ester 1-(2-éthylbutylique) 3-heptylique d'acide cyclohexane-dicarboxylique, ester 1-(diméthyl-butylique) 3-heptylique d'acide cyclohexane-dicarboxylique, ester 1-(1-éthyl-butylique) 3-heptylique d'acide cyclohexane-dicarboxylique, ester 1-(2-éthyl-butylique) 3-heptylique d'acide cyclohexane-dicarboxylique, ester 1-(1-éthyl-2-méthyl-propylique) 3-heptylique d'acide cyclohexane-dicarboxylique, ester 1-décylique 3-hexylique d'acide cyclohexane-dicarboxylique, ester 1-nonylique 3-octylique d'acide cyclohexane-dicarboxylique,
et leurs mélanges, ainsi que les composés identiques à ceux indiqués ci-dessus à ceci près que le cycle de cyclohexane porte les deux groupes ester en les positions 1 et 3 ou 1 et 4.

8. Composition conforme à l'une des revendications précédentes, dans laquelle ledit ester d'acide cyclohexane-polycarboxylique au nombre d'au moins un se trouve présent en une proportion de 1 % à 50 % en poids, de préférence de 2 % à 30 % en poids, et mieux encore de 5 % à 25 % en poids, par rapport au poids dudit PHA au nombre d'au moins un.

9. Composition conforme à l'une des revendications précédentes, qui comprend en outre au moins un stabilisant thermique.

10. Composition conforme à la revendication 9, dans laquelle ledit stabilisant thermique au nombre d'au moins un est choisi parmi les esters d'acide phosphorique ou phosphoreux, les phénols à encombrement stérique, les carboxylates de métal, les composés organostanniques, les maléimides à N-substituant, les maléates de métal et les stéarates de métal, ainsi que les mélanges de tels composés.

11. Composition conforme à l'une des revendications précédentes, qui comprend en outre au moins un agent de nucléation.

12. Composition conforme à la revendication 11, dans laquelle ledit agent de nucléation au nombre d'au moins un est choisi parmi les oxydes, hydroxydes et sels, et les mélanges de tels composés, de métal, en particulier des métaux alcalins, des métaux alcalino-terreux ou des métaux de transition ou de mélanges de tels métaux.

13. Composition conforme à l'une des revendications précédentes, qui comprend en outre au moins une charge de renfort.

14. Composition conforme à la revendication 13, dans laquelle ladite charge de renfort au nombre d'au moins une est choisie parmi les oxydes et hydroxydes inorganiques, comme par exemple les alumine, silice, quartz, zircone et oxyde de titane, et le noir de carbone.

15. Utilisation d'une composition conforme à l'une des revendications précédentes en vue de la fabrication d'articles par un procédé de traitement choisi parmi les suivants : extrusion, filage, moulage par injection, moulage par compression, moulage par soufflage, calandrage, thermoformage, soufflage de film, revêtement.
